# EUROPEAN PATENT SPECIFICATION

(11) **EP 4 243 109 B1**
(45) Date of publication and mention of the grant of the patent: **11.06.2025**
(21) Application number: 22898873.9
(22) Date of filing: 31.10.2022
(51) Int. Cl.: H01M 4/04, H01M 10/42, B05C 5/02, B05C 9/06

(54) **DIE COATER SHIM AND DIE COATER FOR COATING ACTIVE MATERIAL ON CURRENT COLLECTOR FOR SECONDARY BATTERY**
UNTERLEGSCHEIBE FÜR DÜSENBESCHICHTER UND DÜSENBESCHICHTER ZUR BESCHICHTUNG VON AKTIVMATERIAL AUF STROMKOLLEKTOR FÜR SEKUNDÄRBATTERIE
CALE POUR COUCHEUSE À FILIÈRE ET COUCHEUSE À FILIÈRE PERMETTANT LE REVÊTEMENT D'UN MATÉRIAU ACTIF SUR UN COLLECTEUR DE COURANT POUR BATTERIE SECONDAIRE

(30) Priority: 29.11.2021 KR 20210167134
(43) Date of publication of application: 13.09.2023
(73) Proprietor: LG Energy Solution, Ltd., Seoul 07335 (KR)
(72) Inventor: PARK, Joon Sun, Daejeon 34122 (KR); KIM, Man Hyeong, Daejeon 34122 (KR); CHOI, Min Hyuck, Daejeon 34122 (KR); KIM, Guk Tae, Daejeon 34122 (KR)
(74) Representative: Plasseraud IP
(86) International application number: PCT/KR2022/016788
(87) International publication number: WO 2023/096191

(56) References cited:
- JP-A- 2011 240 249
- JP-A- 2020 089 871
- KR-A- 20140 076 051
- KR-A- 20160 088 690
- KR-A- 20170 094 920
- KR-B1- 101 308 251
- KR-B1- 102 035 826
- US-A1- 2020 136 133
- US-A1- 2020 144 657
- US-B2- 9 233 500

## Description

### [Technical Field]

The present application claims the benefit of priority based on Korean Patent Application No. 10-2021-0167134, filed on November 29, 2021.

The present invention relates to a die coater shim and die coater for effectively and simultaneously coating an electrode slurry and an insulating coating liquid on a current collector for a secondary battery.

### [Background Art]

With the development of technology and an increase in demand for mobile devices, the demand for secondary batteries is also rapidly increasing. Among secondary batteries, lithium secondary batteries are widely used as an energy source of various electronic products as well as various mobile devices due to having high energy density and high operating voltage and being excellent in terms of preservation and lifespan.

An electrode in which an active material layer and an insulating layer are formed on a surface of a current collector is used in a lithium secondary battery or the like. Such an electrode is manufactured by applying both an electrode slurry including an active material or the like and an insulating coating liquid including an insulating material or the like on a surface of a current collector using a coating apparatus such as a die coater so that the electrode slurry and the insulating coating liquid overlap with a portion of a corner of an electrode mixture layer and drying the electrode slurry and the insulating coating liquid.

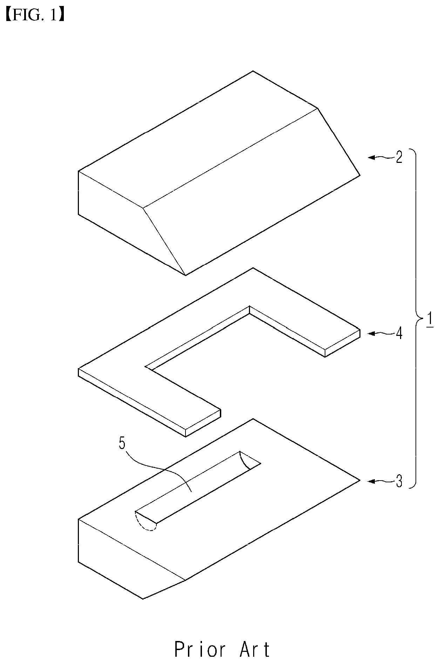

FIG. 1 illustrates a conventional die coater 1 for applying an electrode slurry. The die coater 1 includes an upper block 2 and a lower block 3, a die coater shim 4 is interposed between the upper block 2 and the lower block 3, and the upper block 2, the lower block 3, and the die coater shim 4 are fastened using a plurality of bolt members and coupled to each other. A manifold 5 configured to accommodate a certain volume of electrode slurry is provided in the lower block 3, and the manifold 5 communicates with an external electrode slurry supply (not illustrated).

Here, the die coater shim simultaneously serves to form a slit of a suitable height between the upper block and the lower block, limit a flowing direction of an electrode slurry so that the electrode slurry is discharged toward the slit, and perform sealing so that the electrode slurry does not leak to portions other than the slit. The die coater shim has guides protruding from both ends thereof in a width direction, and a distance between the guides determines a width at which the electrode slurry is applied on a current collector.

An insulating coating liquid is applied on both corners in the width direction of the electrode slurry applied on the current collector. Generally, applying the insulating coating liquid is performed as an additional process using a separate apparatus after applying the electrode slurry on the current collector. Applying the electrode slurry and the insulating coating liquid on the current collector through separate processes in this way is undesirable in terms of production efficiency.

In order to address such a problem, a technology that forms independent slits, each discharging an electrode slurry and an insulating coating liquid, in a single die coater shim has been introduced, but there is a problem that, in a case in which any one solution leaks in the die coater, the two solutions (the electrode slurry and the insulating coating liquid) are mixed, or the two solutions are mixed and discharged from an outlet of the slit, which may cause poor quality of a current collector

US 2020/136133 A1, KR 2017 0094920 A, US 9 233 500 B2 and US 2020/144657 A1 disclose electrode coating devices.

### [Disclosure]

### [Technical Problem]

An object of the present invention is to provide a die coater shim and die coater for simultaneously and effectively coating an electrode slurry and an insulating coating liquid on a current collector for a secondary battery.

### [Technical Solution]

The invention is as defined by the appended claims.

A die coater shim and die coater for simultaneously and effectively coating an electrode slurry and an insulating coating liquid are provided. The die coater shim according to the present invention includes: a base configured to extend in a width direction; first and second guides configured to protrude and extend from both ends of the base; an electrode slurry slit including a step portion configured to extend from the base in the width direction between the first and second guides, wherein a thickness of the step portion is smaller than a thickness of the base, and a stepped space that the step portion forms relative to one surface of the base forms an electrode slurry discharge path; and first and second insulating coating liquid slits including a groove formed on a surface of each of the first and second guides that corresponds to the other surface of the base, wherein one end of the groove forms an insulating coating liquid discharge path.

In a specific embodiment, the step portion may extend to a partial area in the width direction between the first and second guides.

Also, the one end of the groove that forms an outlet of the first and second insulating coating liquid slits may extend to protruding end portions of the first and second guides.

In a specific embodiment, the one end of the groove may be spaced apart from inner corners of the first and second guides that face each other.

In another embodiment, the die coater shim may further include a third guide positioned between the first and second guides and configured to protrude and extend from the base, the step portion may be formed of a first step portion disposed between the first and third guides and a second step portion disposed between the third and second guides, the electrode slurry slit may be formed of a first electrode slurry slit configured to form a first electrode slurry discharge path using the first step portion and a second electrode slurry slit configured to form a second electrode slurry discharge path using the second step portion, and the die coater shim may further include third and fourth insulating coating liquid slits including a pair of grooves formed on a surface of the third guide that corresponds to the other surface of the base, wherein one end of each of the pair of grooves forms an insulating coating liquid discharge path.

In a specific embodiment, outlets of the third and fourth insulating coating liquid slits may face the first and second guides.

Further, widths of the first and second step portions may be equal to each other.

Meanwhile, an aspect of the present invention provides a die coater including: an upper block in which an insulating coating liquid inlet is provided; a lower block coupled to the upper block and in which a manifold configured to accommodate an electrode slurry is provided; and a die coater shim interposed between the upper block and the lower block to form a slit and configured to simultaneously discharge an insulating coating liquid and the electrode slurry through the slit, wherein the die coater shim has an electrode slurry discharge path formed on one surface and an insulating coating liquid discharge path formed on the other surface opposite to the one surface, and the electrode slurry discharge path and the insulating coating liquid discharge path are physically separated from each other on the die coater shim.

In one embodiment, the die coater shim may include: a base configured to extend in a width direction; first and second guides configured to protrude and extend from both ends of the base; an electrode slurry slit including a step portion configured to extend from the base in the width direction between the first and second guides, wherein a thickness of the step portion is smaller than a thickness of the base, and a stepped space that the step portion forms relative to one surface of the base forms an electrode slurry discharge path; and first and second insulating coating liquid slits including a groove formed on a surface of each of the first and second guides that corresponds to the other surface of the base, wherein one end of the groove forms an insulating coating liquid discharge path.

Further, the step portion may extend to a partial area in the width direction between the first and second guides.

In a specific embodiment, a boundary between the base and the step portion may coincide with a rear end of the manifold provided in the lower block, and an end portion of the step portion may coincide with a front end of the manifold or protrude from the front end of the manifold.

For example, the end portion of the step portion may protrude 10 mm or less from the front end of the manifold.

In another embodiment, the one end of the groove that forms an outlet of the first and second insulating coating liquid slits may extend to protruding end portions of the first and second guides.

In a specific embodiment, the one end of the groove may be spaced apart from inner corners of the first and second guides that face each other.

### [Advantageous Effects]

A die coater shim of the present invention is configured to simultaneously discharge an insulating coating liquid and an electrode slurry, and in particular, an electrode slurry discharge path and an insulating coating liquid discharge path are physically separated from each other on the die coater shim.

Accordingly, the die coater shim of the present invention effectively prevents the electrode slurry and the insulating coating liquid from being mixed with each other even when the electrode slurry and/or the insulating coating liquid leak inside a die coater.

Therefore, the present invention allows an electrode slurry and an insulating coating liquid to be simultaneously and effectively coated on a current collector for a secondary battery.

Advantageous effects of the present invention are not limited to those mentioned above, and other unmentioned advantageous effects should be clearly understood by those of ordinary skill in the art from the detailed description below.

### [Brief Description of the Drawings]

FIG. 1 is a view illustrating a configuration of a die coater according to the related art.
FIG. 2 is a view illustrating a structure of a die coater including a die coater shim according to an embodiment of the present invention.
FIG. 3 shows cross-sectional views taken along lines "A-A" and "B-B" of FIG. 2 in a state in which the die coater of FIG. 2 is assembled.
FIG. 4 is a front view of the die coater of FIG. 2 in the state in which the die coater is assembled.
FIG. 5 is a view illustrating a specific structure of the die coater shim illustrated in FIG. 2.
FIG. 6 is a view schematically illustrating a state in which an electrode slurry and an insulating coating liquid are simultaneously applied using the die coater of FIG. 2.
FIG. 7 is a view illustrating a die coater shim according to another embodiment of the present invention.

### [Detailed Description]

Since various modifications may be made to the present invention and the present invention may have various embodiments, specific embodiments will be described in detail below.

However, this does not limit the present invention to the specific embodiments, and all modifications, equivalents, or substitutes included in the technical scope of the present invention should be understood as belonging to the present invention, which is defined by the appended claims.

In the present disclosure, terms such as "include" or "have" should be understood as specifying that features, numbers, steps, operations, elements, components, or combinations thereof are present and not as precluding the possibility of the presence or addition of one or more other features, numbers, steps, operations, elements, components, or combinations thereof in advance.

Also, in the present disclosure, when a part such as a layer, a film, an area, or a plate is described as being "on" another part, this includes not only a case where the part is "directly on" the other part, but also a case where still another part is present therebetween. On the contrary, when a part such as a layer, a film, an area, or a plate is described as being "under" another part, this includes not only a case where the part is "directly under" the other part, but also a case where still another part is present therebetween. Also, in the present application, being disposed "on" may include not only being disposed on an upper portion, but also being disposed on a lower portion.

The present Invention provides a die coater shim and die coater for simultaneously and effectively coating an electrode slurry and an insulating coating liquid.

In one embodiment, a die coater shim according to the present invention includes: a base configured to extend in a width direction; first and second guides configured to protrude and extend from both ends of the base; an electrode slurry slit including a step portion configured to extend from the base in the width direction between the first and second guides, wherein a thickness of the step portion is smaller than a thickness of the base, and a stepped space that the step portion forms relative to one surface of the base forms an electrode slurry discharge path; and first and second insulating coating liquid slits including a groove formed on a surface of each of the first and second guides that corresponds to the other surface of the base, wherein one end of the groove forms an insulating coating liquid discharge path.

In particular, since the die coater shim according to the present invention has the electrode slurry discharge path formed on one surface and the insulating coating liquid discharge path formed on the other surface opposite to the one surface, the die coater shim can simultaneously apply an electrode slurry and an insulating coating liquid on a current collector. Further, since the electrode slurry discharge path and the insulating coating liquid discharge path are physically separated from each other on the die coater shim, even when any one solution leaks in a die coater, the two solutions are prevented from being mixed with each other.

### [Modes of the Invention]

Hereinafter, a die coater shim and die coater for simultaneously and effectively coating an electrode slurry and an insulating coating liquid on a current collector for a secondary battery according to embodiments of the present invention will be described in detail with reference to the accompanying drawings.

### [First Embodiment]

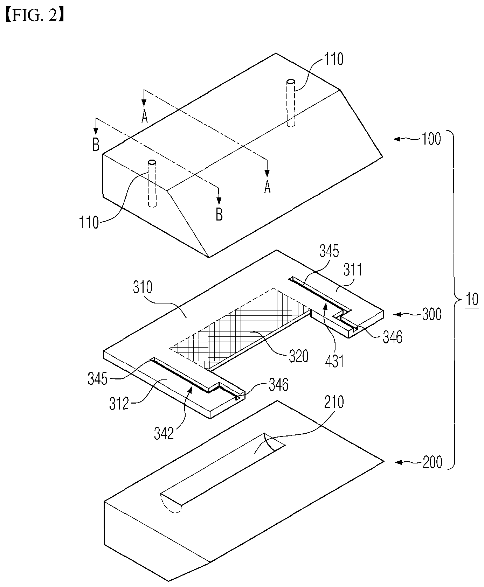

FIG. 2 is a view illustrating a structure of a die coater 10 including a die coater shim 300 according to an embodiment of the present invention. The overall configuration of the die coater 10 and the die coater shim 300 will be described in detail below with reference to FIG. 2.

The die coater 10 includes an upper block 100 and a lower block 200, and the die coater shim 300 is interposed between the upper block 100 and the lower block 200.

The upper block 100 and the lower block 200 are parts constituting a body of the die coater 10, an insulating coating liquid inlet 110 is provided in the upper block 100, and a manifold 210 configured to accommodate an electrode slurry supplied from an outside is provided in the lower block 200.

The die coater shim 300 is interposed between the upper block 100 and the lower block 200 to form a slit having a height suitable for discharging the electrode slurry. Also, the die coater shim 300 serves to limit a flowing direction of the electrode slurry so that the electrode slurry is discharged toward the slit without flowing backward and serves to perform sealing so that the electrode slurry does not leak to portions other than the slit.

As illustrated in FIG. 2, the die coater shim 300 has guides 311 and 312 protruding from both ends thereof in a width direction, and a distance between the guides 311 and 312 determines a width at which the electrode slurry is applied on a current collector.

The die coater shim 300 of the present embodiment is the same as the related art in that a slit for discharging an electrode slurry is formed therein but is different from the related art in that the die coater shim 300 of the present embodiment is configured to simultaneously discharge an insulating coating liquid and an electrode slurry.

In particular, the die coater shim 300 of the present embodiment has an electrode slurry discharge path formed on the bottom surface of the base and an insulating coating liquid discharge path formed on the top surface of the base, and the electrode slurry discharge path and the insulating coating liquid discharge path are physically separated from each other on the die coater shim 300. Since the electrode slurry discharge path and the insulating coating liquid discharge path are physically separated in this way, even when any one liquid (the electrode slurry and/or the insulating coating liquid) leaks inside the die coater 10, the one liquid is effectively prevented from being mixed with the other liquid.

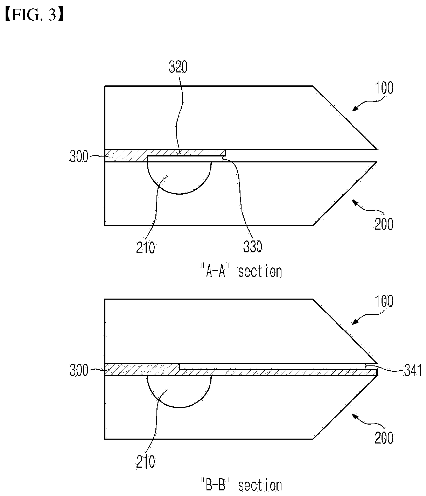

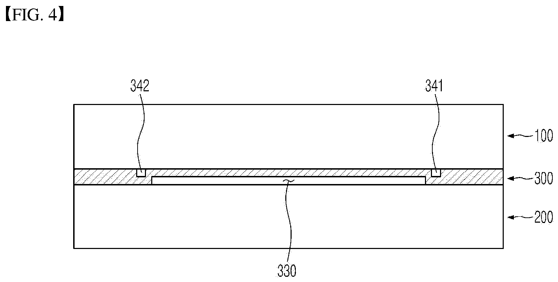

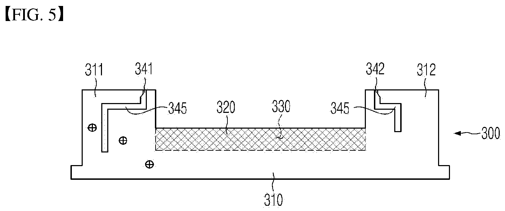

A specific configuration of the die coater shim 300 of the present embodiment will be described in detail with reference to FIGS. 3 to 5. FIG. 3 shows cross-sectional views taken along lines "A-A" and "B-B" of FIG. 2 in a state in which the die coater 10 of FIG. 2 is assembled, FIG. 4 is a front view of the die coater 10 of FIG. 2 in the state in which the die coater 10 is assembled, and FIG. 5 is a plan view illustrating a specific structure of the die coater shim 300 illustrated in FIG. 2.

First, referring to FIG. 5, the die coater shim 300 includes a base 310 configured to extend in the width direction and the first and second guides 311 and 312 configured to protrude and extend from both ends of the base 310, and such a structure corresponds to the related art shown in FIG. 1.

Here, the die coater shim 300 of the present embodiment includes a step portion 320 configured to extend from the base 310 in the width direction between the first and second guides 311 and 312. A thickness of the step portion 320 is smaller than a thickness of the base 310, and accordingly, the step portion 320 forms a stepped space relative to one surface of the base 310 (a surface thereof facing the lower block). As shown in the "A-A" section of FIG. 3 and the front view of FIG. 4, the space that the step portion 320 forms communicates with the lower block 200 in which the manifold 210 is formed. Thus, the step portion 320 forms an electrode slurry slit 330 that forms a discharge path for the electrode slurry accommodated in the manifold 210.

Also, the first and second guides 311 and 312 each include a groove 345 formed in a surface corresponding to the other surface of the base 310 (a surface thereof facing the upper block), and as one end of each groove 345 forms an insulating coating liquid discharge path, first and second insulating coating liquid slits 341 and 342 are provided on the first and second guides 311 and 312. Referring to the "B-B" section of FIG. 3 and the front view of FIG. 4, the first and second insulating coating liquid slits 341 and 342 are formed toward the upper block 100, and accordingly, the electrode slurry slit 330 and the first and second insulating coating liquid slits 341 and 342 are physically separated from each other.

That is, upper and lower surfaces of the first and second guides 311 and 312 around the first and second insulating coating liquid slits 341 and 342 are in close contact with the upper block 100 and the lower block 200, and thus, along with the upper block 100, the first and second insulating coating liquid slits 341 and 342 form independent insulating coating liquid discharge paths isolated from surroundings thereof.

Also, the electrode slurry slit 330 is formed by the space that the step portion 320 between the first and second guides 311 and 312 forms, and accordingly, the electrode slurry discharge path is separated from the first and second guides 311 and 312 due to the step portion 320 and the lower block 200.

Therefore, since, inside the die coater 10, the first and second insulating coating liquid slits 341 and 342 are disposed toward the upper block 100, and the electrode slurry discharge path is disposed toward the lower block 200 and spatially separated, even when any one solution (the electrode slurry and/or the insulating coating liquid) leaks inside the die coater 10, mixing of the two solutions hardly occurs.

In an embodiment of the present invention, the step portion 320 may extend to a partial area in the width direction between the first and second guides 311 and 312. It is necessary for the step portion 320 to have a certain length because the step portion 320 serves to effectively separate the first and second guides 311 and 312 from the manifold 210 of the lower block 200. However, the length of the step portion 320 being too long may adversely affect a flow profile in the electrode slurry discharge path. For example, air bubbles may be present due to a vortex when the electrode slurry is discharged. Thus, there is a need to appropriately design the length of the step portion 320.

In a specific embodiment, a boundary between the base 310 and the step portion 320 may coincide with a rear end (a left side end in the "A-A" section of FIG. 3) of the manifold 210 provided in the lower block 200 to ensure tight sealing of the manifold 210, and an extending end portion of the step portion 320 may at least coincide with a front end of the manifold 210 or protrude from the front end of the manifold 210. For example, the extending end portion of the step portion 320 may protrude 10 mm or less from the front end of the manifold 210.

Also, the one end of the groove 345 that forms an outlet of the first and second insulating coating liquid slits 341 and 342 may extend to protruding end portions of the first and second guides 311 and 312. Such a configuration is shown in the "B-B" section of FIG. 3. Accordingly, the outlet of the first and second insulating coating liquid slits 341 and 342 is positioned at a sharp end portion of the die coater 10.

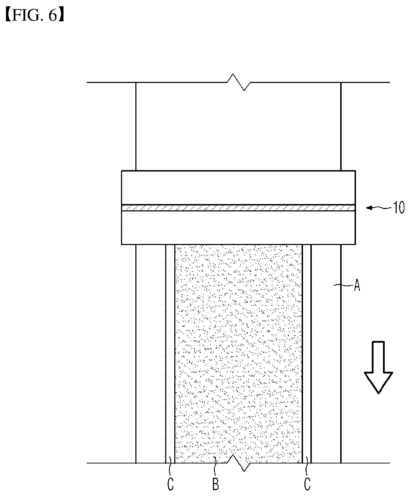

Also, in a specific embodiment, the one end of the groove 345 may be spaced apart from inner corners of the first and second guides 311 and 312 that face each other. A distance at which the one end of the groove 345 that forms the outlet of the first and second insulating coating liquid slits 341 and 342 is spaced apart from the inner corners of the first and second guides 311 and 312 corresponds to a distance at which the one end is spaced apart from both ends of an electrode slurry discharge width defined by the inner corners of the first and second guides 311 and 312. This is to, when an electrode slurry and an insulating coating liquid are simultaneously discharged, prevent the insulating coating liquid, which has slight fluidity, from being immediately mixed with a corner of the discharged electrode slurry. In this way, the edge of the electrode slurry is effectively protected by the insulating coating liquid. Simultaneously applying an electrode slurry B and an insulating coating liquid C on a current collector A using the die coater 10 of the present invention is shown in FIG. 6.

### [Second Embodiment]

A second embodiment of the present invention is an embodiment suitable for a case in which an electrode slurry and an insulating coating liquid are applied in two or more rows on a current collector supplied in the form of a coil and then slitting is performed.

That is, the second embodiment corresponds to an embodiment suitable for simultaneously applying an active material coating, which is formed of an "insulating coating liquid-electrode slurry-insulating coating liquid" structure, in two or more rows on a current collector.

In the second embodiment, there is no significant change in the configuration of the upper block 100 and the lower block 200 constituting the die coater 10, and a main difference is in the die coater shim 300. However, since additional insulating coating liquid slits 343 and 344 are present in the die coater shim 300 of the second embodiment, an additional insulating coating liquid inlet 110 corresponding thereto may be required in the upper block 100.

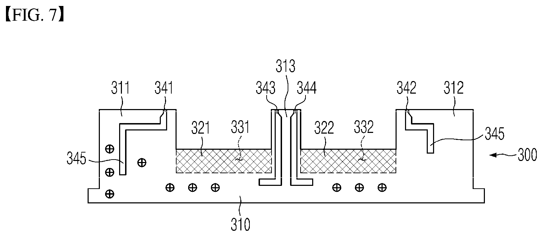

The configuration of the die coater shim 300 according to the second embodiment is shown in FIG. 7, and the second embodiment will be described focusing on the differences from the first embodiment described above.

Referring to FIG. 7, the die coater shim 300 of the second embodiment further includes a third guide 313 positioned between the first and second guides 311 and 312 and configured to protrude and extend from an intermediate portion of the base 310.

Also, as the third guide 313 is provided on the intermediate portion of the base 310, the step portion 320 is separated into a first step portion 321 disposed between the first guide and the third guide 313 and a second step portion 322 disposed between the third and second guides. Also, corresponding thereto, the electrode slurry slit 330 is divided into a first electrode slurry slit 331 configured to form one electrode slurry discharge path using the first step portion 321 and a second electrode slurry slit 332 configured to form another electrode slurry discharge path using the second step portion 322.

Also, a pair of grooves 345 are formed on a surface of the third guide 313 that corresponds to the other surface of the base 310 (the surface thereof facing the upper block), and one ends of the pair of grooves 345 constitute third and fourth insulating coating liquid slits 343 and 344 that form additional insulating coating liquid discharge paths.

Referring to FIG. 7 with reference to the first embodiment, a structure that the first and third guides 311 and 313 constitute and a structure that the third and second guides 313 and 312 constitute are symmetrical to each other. That is, the die coater shim 300 of the second embodiment may be described as a structure in which two die coater shims 300 of the first embodiment are coupled in parallel in a transfer direction of the current collector A (see FIG. 6).

Therefore, using the die coater shim 300 of FIG. 7, an active material may be simultaneously applied in two rows on a current collector in order to be suitable for slitting. In a case in which widths of two rows of electrode slurries are equal to each other, widths of the first and second step portions 321 and 322 may be made equal to each other. Here, since the width of the insulating coating liquid is almost constant regardless of the width of the electrode slurry, there is no need to significantly change the configuration of the third and fourth insulating coating liquid slits 343 and 344.

The present invention has been described in detail above using the drawings, embodiments, or the like. However, configurations illustrated or described in the drawings or embodiments herein are only some embodiments of the present invention.

### [Description of reference numerals]

10: die coater
100: upper block
110: insulating coating liquid inlet
200: lower block
210: manifold
300: die coater shim
310: base
311; first guide
312: second guide
313: third guide
320: step portion
321: first step portion
322: second step portion
330: electrode slurry slit
331: first electrode slurry slit
332: second electrode slurry slit
341: first insulating coating liquid slit
342: second insulating coating liquid slit
343: third insulating coating liquid slit
344: fourth insulating coating liquid slit
345: groove

### [Industrial Applicability]

The present invention is suitable for application to a die coater for simultaneously coating an electrode slurry and an insulating coating liquid on a current collector for a secondary battery.

## Claims

1. A die coater shim (300) for simultaneously applying an electrode slurry and an insulating coating liquid on a current collector, the die coater shim (300) comprising:
a base (310) configured to extend in a width direction;
first and second guides (311, 312) disposed on each end of the base (310) in the width direction, wherein the first and second guides (311, 312) protrude and extend from the base (310) in a direction orthogonal to the width direction;
**characterized in that** a first electrode slurry slit (331) including a first step portion (321) is disposed between the first and second guides (311, 312) in the width direction, wherein a thickness of the first step portion (321) is smaller than a thickness of the base (310), wherein the thickness of the first step portion (321) forms a first stepped space relative to a first surface of the base (310), wherein the first stepped space forms an electrode slurry discharge path; and **in that**
first and second insulating coating liquid slits (341, 342) including a groove (345) are formed on a surface of each of the first and second guides (311, 312) disposed on a second surface of the base (310), wherein one end of each of the grooves (345) forms an insulating coating liquid discharge path.

2. The die coater shim (300) of claim 1, wherein a step portion (320) extends to a partial area in the width direction between the first and second guides (311, 312), wherein the first and second guides (311, 312) protrude and extend from the partial area in the direction orthogonal to the width direction.

3. The die coater shim (300) of claim 1, wherein the one end of each of the grooves (345) forms an outlet of the first and second insulating coating liquid slits (341, 342), wherein the one end of each of the grooves (345) extends to a protruding end portion of each of the first and second guides (311, 312).

4. The die coater shim (300) of claim 3, wherein the one end of each of the grooves (345) is spaced further apart in the width direction from inner corners of the first and second guides (311, 312).

5. The die coater shim (300) of claim 1, further comprising:
a third guide (313) positioned between the first and second guides (311, 312), wherein the third guide (313) protrudes and extends from the base (310) in the direction orthogonal to the width direction; and
third and fourth insulating coating liquid slits (343, 344) including a pair of grooves (345) formed on a surface of the third guide (313), wherein one end of each of the pair of grooves (345) forms an insulating coating liquid discharge path,
wherein the step portion (320) includes a first step portion (321) and a second step portion (322), wherein the first step portion (321) is disposed between the first and third guides (311, 313) and the second step portion (322) is disposed between the third and second guides (313, 312),
wherein the electrode slurry slit (330) includes the first electrode slurry slit (331) and a second electrode slurry slit (332), wherein the second electrode slurry slit (332) includes a second step portion (322), wherein a second thickness of the second step portion (322) is smaller than the thickness of the base (310), wherein the thickness the second step portion (322) forms a second stepped space relative to the first surface of the base (310), wherein the second stepped space forms a second electrode slurry discharge path.

6. The die coater shim (300) of claim 5, wherein an outlet of the third insulating coating liquid slit (343) faces the first guide (311) and an outlet of the fourth insulating coating liquid faces the second guide (312).

7. The die coater shim (300) of claim 5, wherein a width of each of the first and second step portions (321, 322) are equal.

8. A die coater (10) comprising:
an upper block (100) having an insulating coating liquid inlet (110);
a lower block (200) coupled to the upper block (100), wherein the lower block (200) includes a manifold (210) configured to accommodate an electrode slurry; and
a die coater shim (300) interposed between the upper block (100) and the lower block (200) so as to form a slit, wherein the die coater (10) is configured to simultaneously discharge an insulating coating liquid and the electrode slurry through the slit,
wherein the die coater shim (300) has an electrode slurry discharge path formed on a first surface of the base (310) and an insulating coating liquid discharge path formed on a second surface of the base (310),
wherein the electrode slurry discharge path and the insulating coating liquid discharge path are physically separated from each other on the die coater shim (300),
**characterized in that** the die coater shim (300) is as defined in claim 1.

9. The die coater (10) of claim 8, wherein the step portion (320) extends to a partial area in the width direction between the first and second guides (311, 312), wherein the first and second guides (311, 312) protrude and extend from the partial area in the direction orthogonal to the width direction.

10. The die coater (10) of claim 9, wherein:
a boundary between the base (310) and the step portion (320) coincides with a rear end of the manifold (210) provided in the lower block (200), wherein the rear end of the manifold (210) is disposed adjacent to the base (310) of the die coater (10); and
an end portion of the step portion (320) coincides with a front end of the manifold (210) or protrudes from the front end of the manifold (210), wherein the front end of the manifold (210) is disposed further away from the base (310) of the die coater (10) than the rear end of the manifold (210).

11. The die coater (10) of claim 10, wherein the end portion of the step portion (320) protrudes 10 mm or less from the front end of the manifold (210).

12. The die coater (10) of claim 8, wherein the one end of each of the grooves (345) forms an outlet of the first and second insulating coating liquid slits (341, 342), wherein the one end of each of the grooves (345) extends to a protruding end portion of each of the first and second guides (311, 312).

13. The die coater (10) of claim 12, wherein the one end of each of the grooves (345) is spaced further apart in the width direction from inner corners of the first and second guides (311, 312).

## Patentansprüche

1. Düsenbeschichtungseinheitsabstandselement (300) zum simultanen Aufbringen einer Elektrodensuspension und einer Isolierungsbeschichtungsflüssigkeit an einem Stromkollektor, wobei das Düsenbeschichtungseinheitsabstandselement (300) umfasst:
eine Basis (310), welche dazu eingerichtet ist, sich in einer Breitenrichtung zu erstrecken;
eine erste und eine zweite Führung (311, 312), welche an jedem Ende der Basis (310) in der Breitenrichtung angeordnet sind, wobei die erste und die zweite Führung (311, 312) vorstehen und sich erstrecken von der Basis (310) in einer Richtung, welche orthogonal zu der Breitenrichtung ist;
**dadurch gekennzeichnet, dass** ein erster Elektrodensuspension-Schlitz (331), welcher einen ersten Stufenabschnitt (321) umfasst, zwischen der ersten und der zweiten Führung (311, 312) in der Breitenrichtung angeordnet ist, wobei eine Dicke des ersten Stufenabschnitts (321) kleiner als eine Dicke der Basis (310) ist, wobei die Dicke des ersten Stufenabschnitts (321) einen ersten gestuften Raum relativ zu einer ersten Fläche der Basis (310) bildet, wobei der erste gestufte Raum einen Elektrodensuspensionsabgabeweg bildet; und dass
ein erster und ein zweiter Isolierungsbeschichtungsflüssigkeit-Schlitz (341, 342), welche eine Nut (345) umfassen, an einer Fläche von jeder der ersten und der zweiten Führung (311, 312) gebildet ist, welche an einer zweiten Fläche der Basis (310) angeordnet sind, wobei ein Ende von jeder der Nuten (345) einen Isolierungsbeschichtungsflüssigkeitsabgabeweg bildet.

2. Düsenbeschichtungseinheitsabstandselement (300) nach Anspruch 1, wobei sich ein Stufenabschnitt (320) zu einem Teilbereich in der Breitenrichtung zwischen der ersten und der zweiten Führung (311, 312) erstreckt, wobei die erste und die zweite Führung (311, 312) von dem Teilbereich in der Richtung, welche orthogonal zu der Breitenrichtung ist, vorstehen und sich erstrecken.

3. Düsenbeschichtungseinheitsabstandselement (300) nach Anspruch 1, wobei das eine Ende jeder der Nuten (345) einen Auslass des ersten und des zweiten Isolierungsbeschichtungsflüssigkeit-Schlitzes (341, 342) gebildet, wobei sich das eine Ende jeder der Nuten (345) zu einem vorstehenden Endabschnitt jeder der ersten und der zweiten Führung (311, 312) erstreckt.

4. Düsenbeschichtungseinheitsabstandselement (300) nach Anspruch 3, wobei das eine Ende jeder der Nuten (345) in der Breitenrichtung von inneren Ecken der ersten und der zweiten Führung (311, 312) weiter beabstandet ist.

5. Düsenbeschichtungseinheitsabstandselement (300) nach Anspruch 1, ferner umfassend:
eine dritte Führung (313), welche zwischen der ersten und der zweiten Führung (311, 312) positioniert ist, wobei die dritte Führung (313) von der Basis (310) in der Richtung, welche orthogonal zu der Breitenrichtung ist, vorsteht und sich erstreckt, und
einen dritten und einen vierten Isolierungsbeschichtungsflüssigkeit-Schlitz (343, 344), welche ein Paar Nuten (345) umfassen, welche an einer Fläche der dritten Führung (313) gebildet sind, wobei ein Ende von jedem des Paars von Nuten (345) einen Isolierungsbeschichtungsflüssigkeitsabgabeweg bildet,
wobei der Stufenabschnitt (320) einen ersten Stufenabschnitt (321) und einen zweiten Stufenabschnitt (322) umfasst, wobei der erste Stufenabschnitt (321) zwischen der ersten und der dritten Führung (311, 313) angeordnet ist und der zweite Stufenabschnitt (322) zwischen der dritten und der zweiten Führung (313, 312) angeordnet ist,
wobei der Elektrodensuspension-Schlitz (330) den ersten Elektrodensuspension-Schlitz (331) und einen zweiten Elektrodensuspension-Schlitz (332) umfasst, wobei der zweite Elektrodensuspension-Schlitz (332) einen zweiten Stufenabschnitt (322) umfasst, wobei eine zweite Dicke des zweiten Stufenabschnitts (322) kleiner als die Dicke der Basis (310) ist, wobei die Dicke des zweiten Stufenabschnitts (322) einen zweiten gestuften Raum relativ zu der ersten Fläche der Basis (310) bildet, wobei der zweite gestufte Raum einen zweiten Elektrodensuspensionsabgabeweg bildet.

6. Düsenbeschichtungseinheitsabstandselement (300) nach Anspruch 5, wobei ein Auslass des dritten Isolierungsbeschichtungsflüssigkeit-Schlitz (343) der ersten Führung (311) zugewandt ist und ein Auslass des vierten Isolierungsbeschichtungsflüssigkeit der zweiten Führung (312) zugewandt ist.

7. Düsenbeschichtungseinheitsabstandselement (300) nach Anspruch 5, wobei eine Breite von jedem des ersten und des zweiten Stufenabschnitts (321, 322) gleich sind.

8. Düsenbeschichtungseinheit (10), umfassend:
einen oberen Block (100), welcher einen Isolierungsbeschichtungsflüssigkeitseinlass (110) aufweist;
einen unteren Block (200), welcher mit dem oberen Block (100) gekoppelt ist, wobei der untere Block (200) einen Sammler (210) umfasst, welcher dazu eingerichtet ist, eine Elektrodensuspension aufzunehmen; und
ein Düsenbeschichtungseinheitsabstandselement (300), welches zwischen dem oberen Block (100) und dem unteren Block (200) eingefügt ist, um einen Schlitz zu bilden, wobei die Düsenbeschichtungseinheit (10) dazu eingerichtet ist, eine Isolierungsbeschichtungsflüssigkeit und die Elektrodensuspension durch den Schlitz simultan abzugeben,
wobei das Düsenbeschichtungseinheitsabstandselement (300) einen Elektrodensuspensionsabgabeweg, welcher an einer ersten Fläche der Basis (310) gebildet ist, und einen Isolierungsbeschichtungsflüssigkeitsabgabeweg aufweist, welcher an einer zweiten Fläche der Basis (310) gebildet ist,
wobei der Elektrodensuspensionsabgabeweg und der Isolierungsbeschichtungsflüssigkeitsabgabeweg an dem Düsenbeschichtungseinheitsabstandselement (300) physisch voneinander getrennt sind,
**dadurch gekennzeichnet, dass** das Düsenbeschichtungseinheitsabstandselement (300) ist, wie in Anspruch 1 definiert.

9. Düsenbeschichtungseinheit (10) nach Anspruch 8, wobei sich der Stufenabschnitt (320) zu einem Teilbereich in der Breitenrichtung zwischen der ersten und der zweiten Führung (311, 312) erstreckt, wobei die erste und die zweite Führung (311, 312) von dem Teilbereich in der Richtung, welche orthogonal zu der Breitenrichtung ist, vorstehen und sich erstrecken.

10. Düsenbeschichtungseinheit (10) nach Anspruch 9, wobei:
eine Grenze zwischen der Basis (310) und dem Stufenabschnitt (320) mit einem hinteren Ende des Sammlers (210) zusammenfällt, welcher in dem unteren Block (200) bereitgestellt ist, wobei das hintere Ende des Sammlers (210) benachbart zu der Basis (310) der Düsenbeschichtungseinheit (10) angeordnet ist; und
ein Endabschnitt des Stufenabschnitts (320) mit einem vorderen Ende des Sammlers (210) zusammenfällt oder von dem vorderen Ende des Sammlers (210) vorsteht, wobei das vordere Ende des Sammlers (210) weiter weg von der Basis (310) der Düsenbeschichtungseinheit (10) als von dem hinteren Ende des Sammlers (210) angeordnet ist.

11. Düsenbeschichtungseinheit (10) nach Anspruch 10, wobei der Endabschnitt des Stufenabschnitts (320) 10 mm oder weniger von dem vorderen Ende des Sammlers (210) vorsteht.

12. Düsenbeschichtungseinheit (10) nach Anspruch 8, wobei das eine Ende jeder der Nuten (345) einen Auslass des ersten und des zweiten Isolierungsbeschichtungsflüssigkeit-Schlitzes (341, 342) bildet, wobei das eine Ende jeder der Nuten (345) sich zu einem vorstehenden Endabschnitt jeder der ersten und der zweiten Führung (311, 312) erstreckt.

13. Düsenbeschichtungseinheit (10) nach Anspruch 12, wobei das eine Ende jeder der Nuten (345) in der Breitenrichtung von inneren Ecken der ersten und der zweiten Führung (311, 312) weiter beabstandet ist.

## Revendications

1. Cale (300) pour coucheuse à filière pour appliquer simultanément une suspension d'électrode et un liquide de revêtement isolant sur un collecteur de courant, la cale (300) pour coucheuse à filière comprenant :
une base (310) configurée pour s'étendre dans une direction de largeur ;
de premier et deuxième guides (311, 312) disposés sur chaque extrémité de la base (310) dans la direction de largeur, dans laquelle les premier et deuxième guides (311, 312) font saillie et s'étendent à partir de la base (310) dans une direction orthogonale à la direction de largeur ;
**caractérisée en ce qu'**une première fente (331) pour suspension d'électrode comportant une première partie étagée (321) est disposée entre les premier et deuxième guides (311, 312) dans la direction de largeur, dans laquelle une épaisseur de la première partie étagée (321) est inférieure à une épaisseur de la base (310), dans laquelle l'épaisseur de la première partie étagée (321) forme un premier espace étagé par rapport à une première surface de la base (310), dans laquelle le premier espace étagé forme un trajet de décharge de suspension d'électrode ; et **en ce que**
de première et deuxième fentes (341, 342) pour liquide de revêtement isolant comportant une rainure (345) sont formées sur une surface de chacun des premier et
deuxième guides (311, 312) disposés sur une deuxième surface de la base (310), dans laquelle une extrémité de chacune des rainures (345) forme un trajet de décharge de liquide de revêtement isolant.

2. Cale (300) pour coucheuse à filière selon la revendication 1, dans laquelle une partie étagée (320) s'étend jusqu'à une zone partielle dans la direction de largeur entre les premier et deuxième guides (311, 312), dans laquelle les premier et deuxième guides (311, 312) font saillie et s'étendent à partir de la zone partielle dans la direction orthogonale à la direction de largeur.

3. Cale (300) pour coucheuse à filière selon la revendication 1, dans laquelle ladite extrémité de chacune des rainures (345) forme une sortie des première et deuxième fentes (341, 342) pour liquide de revêtement isolant, dans laquelle ladite extrémité de chacune des rainures (345) s'étend jusqu'à une partie d'extrémité saillante de chacun des premier et deuxième guides (311, 312).

4. Cale (300) pour coucheuse à filière selon la revendication 3, dans laquelle ladite extrémité de chacune des rainures (345) est espacée davantage dans la direction de largeur des coins intérieurs des premier et deuxième guides (311, 312).

5. Cale (300) pour coucheuse à filière selon la revendication 1, comprenant en outre :
un troisième guide (313) positionné entre les premier et deuxième guides (311, 312), dans laquelle le troisième guide (313) fait saillie et s'étend à partir de la base (310) dans la direction orthogonale à la direction de largeur ; et
de troisième et quatrième fentes (343, 344) pour liquide de revêtement isolant comportant une paire de rainures (345) formées sur une surface du troisième guide (313), dans laquelle une extrémité de chacune de la paire de rainures (345) forme un trajet de décharge de liquide de revêtement isolant,
dans laquelle la partie étagée (320) comporte une première partie étagée (321) et une deuxième partie étagée (322), dans laquelle la première partie étagée (321) est disposée entre les premier et troisième guides (311, 313) et la deuxième partie étagée (322) est disposée entre les troisième et deuxième guides (313, 312),
dans laquelle la fente (330) pour suspension d'électrode comporte la première fente (331) pour suspension d'électrode et une deuxième fente (332) pour suspension d'électrode, dans laquelle la deuxième fente (332) pour suspension d'électrode comporte une deuxième partie étagée (322), dans laquelle une deuxième épaisseur de la deuxième partie étagée (322) est inférieure à l'épaisseur de la base (310), dans laquelle l'épaisseur de la deuxième partie étagée (322) forme un deuxième espace étagé par rapport à la première surface de la base (310), dans laquelle le deuxième espace étagé forme un deuxième trajet de décharge de suspension d'électrode.

6. Cale (300) pour coucheuse à filière selon la revendication 5, dans laquelle une sortie de la troisième fente (343) pour liquide de revêtement isolant est orientée vers le premier guide (311) et une sortie du quatrième liquide de revêtement isolant est orientée vers le deuxième guide (312).

7. Cale (300) pour coucheuse à filière selon la revendication 5, dans laquelle des largeurs de chacune des première et deuxième parties étagées (321, 322) sont égales.

8. Coucheuse à filière (10) comprenant :
un bloc supérieur (100) ayant une entrée de liquide de revêtement isolant (110) ;
un bloc inférieur (200) accouplé au bloc supérieur (100), dans lequel le bloc inférieur (200) comporte un collecteur (210) configuré pour accueillir une suspension d'électrode ; et
une cale (300) pour coucheuse à filière interposée entre le bloc supérieur (100) et le bloc inférieur (200) de façon à former une fente, dans lequel le métier à filière pour l'enduction par fusion (10) est configuré pour décharger simultanément un liquide de revêtement isolant et la suspension d'électrode à travers la fente,
dans lequel la cale (300) pour coucheuse à filière présente un trajet de décharge de suspension d'électrode formé sur une première surface de la base (310) et un trajet de décharge de liquide de revêtement isolant formé sur une deuxième surface de la base (310),
dans lequel le trajet de décharge de suspension d'électrode et le trajet de décharge de liquide de revêtement isolant sont physiquement séparés l'un de l'autre sur la cale (300) pour coucheuse à filière,
**caractérisé en ce que** la cale (300) pour coucheuse à filière est telle que définie dans la revendication 1.

9. Coucheuse à filière (10) selon la revendication 8, dans lequel la partie étagée (320) s'étend jusqu'à une zone partielle dans la direction de largeur entre les premier et deuxième guides (311, 312), dans lequel les premier et deuxième guides (311, 312) font saillie et s'étendent à partir de la zone partielle dans la direction orthogonale à la direction de largeur.

10. Coucheuse à filière (10) selon la revendication 9, dans lequel :
une limite entre la base (310) et la partie étagée (320) coïncide avec une extrémité arrière du collecteur (210) disposé dans le bloc inférieur (200), dans lequel l'extrémité arrière du collecteur (210) est disposée adjacente à la base (310) du métier à filière pour l'enduction par fusion (10) ; et
une partie d'extrémité de la partie étagée (320) coïncide avec une extrémité avant du collecteur (210) ou fait saillie à partir de l'extrémité avant du collecteur (210), dans lequel l'extrémité avant du collecteur (210) est disposée plus loin de la base (310) du métier à filière pour l'enduction par fusion (10) que l'extrémité arrière du collecteur (210).

11. Coucheuse à filière (10) selon la revendication 10, dans lequel la partie d'extrémité de la partie étagée (320) fait saillie de 10 mm ou moins à partir de l'extrémité avant du collecteur (210).

12. Coucheuse à filière (10) selon la revendication 8, dans lequel ladite extrémité de chacune des rainures (345) forme une sortie des première et deuxième fentes (341, 342) pour liquide de revêtement isolant, dans lequel ladite extrémité de chacune des rainures (345) s'étend jusqu'à une partie d'extrémité saillante de chacun des premier et deuxième guides (311, 312).

13. Coucheuse à filière (10) selon la revendication 12, dans lequel ladite extrémité de chacune des rainures (345) est espacée davantage dans la direction de largeur des coins intérieurs des premier et deuxième guides (311, 312).
